# EUROPEAN PATENT APPLICATION

(11) **EP 0 999 630 A1**
(43) Date of publication of application: **10.05.2000**
(21) Application number: 98203748.3
(22) Date of filing: 06.11.1998
(51) Int. Cl.: H02H 6/00, H02H 3/093

(54) **Device for the thermal overload protection of an electric motor and related method**

(71) Applicant: ABB Research Ltd., 8050 Zürich (CH)
(72) Inventor: Corbetta, Giuliano, 20110 Milano (IT); Manzoni, Ezio, 24030 Terno d'Isola (Bg) (IT)
(74) Representative: Giavarini, Francesco

(57) **Abstract**

The present invention concerns a device for the thermal overload protection of an electric motor connected to a power supply line. The device comprises:
- a processing and control unit that also interrupts the motor's power supply when the temperature values calculated exceed a predetermined threshold;
- a volatile memory for saving the last temperature values calculated by the processing unit before an interruption of the power supply;
- a digital timer unit that measures the duration tₛ of the power supply interruption time.

The timer unit and the thermal memory are powered by a single power supply unit during the phase in which the power supply is interrupted.

## Description

The present invention relates to a device for the thermal overload protection of a motor and related method.

More specifically, the present invention relates to a device for the thermal overload protection of a motor that, in the event of interruption of the power supply, is able to simulate the cooling of the motor and to supply temperature values identifying the actual thermal status of the motor itself when it is restarted.

As is known, thermal overload protection devices for electric motors, and for low voltage motors in particular, are used to monitor how much current above the rating plate value has fed a motor, for how long and starting from which initial conditions of the motor. In principles, the higher the power supply current, the shorter the time for which the motor is able to withstand the overload. When the overload condition reaches potentially dangerous values for the correct operation of the motor, the protection device intervenes, interrupting the power supply.

In these situations it may be the case that the interruption does not last long enough to allow the motor to cool down completely. It is therefore important to have a memory that can retain the thermal image of the motor at the moment it was switched off by recording the last temperature values calculated. This makes it possible to simulate the cooling dynamic of the motor during the phase in which the power supply is interrupted on the basis of these recorded values and the time for which the motor's power supply is interrupted. In this way, when the motor is switched back on again, one will thus have temperature values available that reflect the actual thermal conditions of the motor and make it possible to prevent inappropriate operation of the protection device itself in the restarting phase.

The use of thermal overload protection devices of known type in the prior art has a number of drawbacks and disadvantages.

The use of bimetallic relay protection devices is known, for example. In these cases, being the relay temperature-sensitive, it represents itself a means for retaining the temperature values at the moment the motor was switched off and for simulating the thermal behaviour of the motor during the phase in which the power supply is interrupted. Bimetallic relays, however, have the significant drawback of being sensitive to the temperature outside the motor so that the cooling dynamic is affected by large tolerances. This variability results in poor repeatability of the behaviour of the protection device and inappropriate operation, above all during the motor's starting phase.

The use of microprocessor-based electronic relay as thermal overload protection devices is also known. In this case, the main problem of the known devices is that of being able to obtain sufficient power during the power supply interruption phase to ensure the correct operation of the parts of the relay designed to simulate the cooling dynamic.

The main task of the present invention is to provide a device for the thermal overload protection of an electric motor that, in addition to interrupting the power supply to the motor when the operating conditions so require, is also able to simulate the cooling of the motor during the power supply interruption phase and to supply, when the motor is switched back on again, temperature values indicating the actual thermal status of the motor itself in a manner that is entirely independent of the outside temperature and/or other operating parameters of the device, distinguishing itself from the devices of known type for the accuracy and repeatability of the values supplied.

As part of this task, one object of the present invention is to provide a device for the thermal overload protection of an electric motor that features an optimised structure able to minimise the amount of power required during the power supply interruption phase.

Another task of the present invention is to provide a device for the thermal overload protection of an electric motor that is able to prevent inappropriate tripping operation in particular during the restarting phases of the motor.

A further but not the last object of the present invention is to provide a device for the thermal overload protection of an electric motor that is highly reliable and relatively easy to manufacture at competitive costs.

This task, together with these and other objects that shall emerge more clearly hereinafter, are achieved by a device for the thermal overload protection of an electric motor connected to a power supply line characterised by the fact that it comprises:
- a processing and control unit suitable for calculating values indicating the temperatures of the motor, said processing and control unit supplying in output to interruption means a signal for interrupting the power supply to the motor when the temperature values calculated exceed a predetermined threshold;
- a volatile memory for saving the last temperature values calculated by the processing unit before an interruption of the power supply;
- a digital timer unit that measures the duration tₛ of the power supply interruption time, said timer unit and the thermal memory being powered by a single power supply unit during the phase in which the power supply is interrupted;
   the value tₛ and said last temperature values being supplied to the processing unit for the calculation of new temperature values identifying the thermal status of the motor at the moment it is switched back on.

The device as in the invention therefore makes it possible to simulate the thermal behaviour of the motor during the power supply interruption phase of the motor and to provide, at the moment of restarting, temperature values identifying the thermal status of the motor; in particular, the device is able to calculate these values with extreme accuracy and repeatability in a way that is independent of external factors or the operating parameters of the device itself.

In addition, the device offers the considerable advantage of being made using a constructional architecture that optimises the power required during the power supply interruption phase with a consequent cost benefit.

The aforementioned task, as well as the aforesaid and other objects, are likewise achieved by a method for the thermal overload protection of an electric motor connected to a power supply line characterised by the fact that it comprises the following phases:
a) acquiring a signal indicating the power supply current of the motor;
b) calculating, using programmable computing means, values indicating the temperatures of the motor by means of a thermal model of the motor itself, updating said values in a volatile memory;
c) comparing at least one of said values indicating the temperatures of the motor with a predetermined threshold, and in the event of said threshold being exceeded,
d) interrupting the power supply to the motor, saving the last temperature values calculated in said volatile memory;
e) measuring the power supply interruption time tₛ of the motor using a digital timer unit, said timer unit and the volatile memory being powered by a single power supply unit; and, at the moment the motor is switched back on again,
f) supplying to said programmable computing means the value tₛ and the last temperature values saved in the memory to calculate new values identifying the thermal status of the motor.

Further characteristics and advantages of the invention shall emerge more clearly from the description of a preferred but not exclusive embodiment of the device as in the invention, illustrated purely by way of example and without limitation in the attached drawings, in which:
Figure 1 is an overall block diagram of the thermal overload protection device as in the invention;
Figure 2 is a detailed block diagram of the device as in Figure 1;
Figure 3 is a flow diagram illustrating the sequence of operating phases of the thermal overload protection device as in the invention.

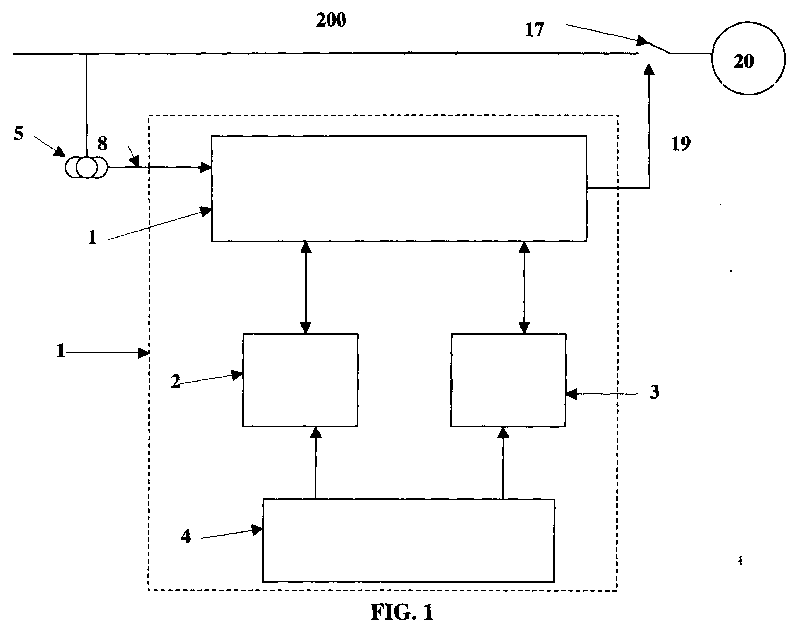

With reference to Figure 1, the thermal overload protection device as in the invention, indicated overall by reference number 100, comprises a processing and control unit 1 for calculating the values indicating the temperatures of the motor to be protected, a volatile memory 2 for storing the temperature values calculated by the unit 1, a digital timer unit 3 that uses a digital timer to calculate the time for which the power supply to the motor is interrupted following operation of the protection device, and a power supply unit 4.

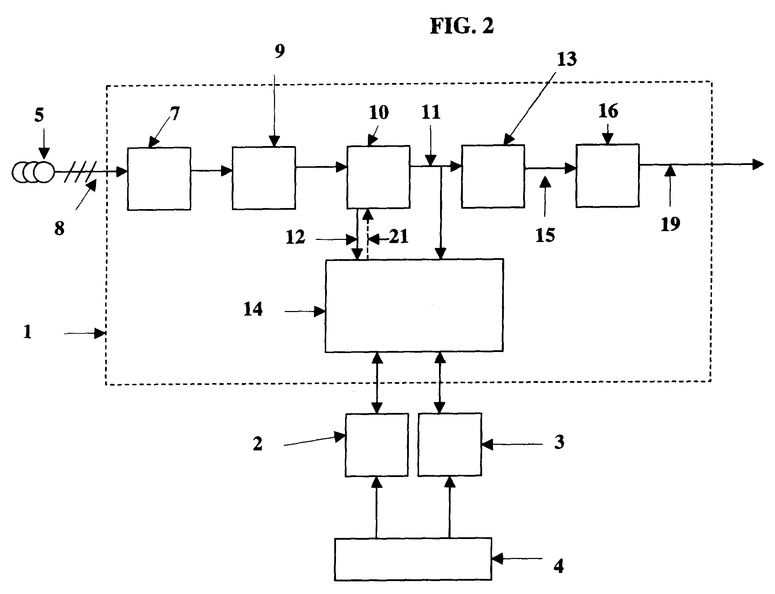

In particular, as illustrated in detail in Figure 2, suitable current sensors 5, such as current transformers for example, measure the power supply currents of an electric line 200 connected to the motor 20 and supply to conditioning means 7 corresponding signals 8 indicating said currents; for simplicity's sake, the descriptions in Figures 1 and 2 show the power supply currents generally as a single signal 8. The conditioning means 7 condition the signal 8 in order to give it a suitable level in input to computing and conversion means 9. The computing and conversion means 9 convert the current signal from an analogue to a digital signal and supply in output to programmable computing means 10 a signal indicating the root mean square value of the current of the power supply to the motor. Said programmable computing means 10 calculate the status variables of a thermal model, the equations of which simulate, in particular, the progress of the temperatures of the copper T_{cu} and of the iron T_{fe} in the motor in relation to said root mean square value. In particular, the coefficients of the thermal model depend not only on the thermal dynamic of the motor but also on the digitising adopted in the processing unit 1 for calculating the status equations of the model.

In the embodiment of the device as in the invention these means 10 comprise a programmable memory selected from the EPROM (Erasable Programmable Read-Only-Memory), EEPROM (Electrically Erasable Programmable Read-Only-Memory), flash memory and PROM (Programmable Read-Only-Memory) group.

In output from the programmable computing means 10 one has signals 11 and 12 indicating, respectively, the temperatures of the copper T_{cu} and of the iron T_{fe} of the motor. In the embodiment of the device as in the invention, the signal 11 indicating the temperature of the copper T_{cu}, is sent to comparator means 13 and there compared to a predetermined threshold value; alternatively, and in an entirely equivalent manner, both the signals indicating the temperatures, or indeed that of the iron T_{fe} only, could be sent to the comparator means 13.

The signals 11 and 12 are simultaneously supplied to interfacing means 14 that transfer them to the volatile memory 2 where they are recorded.

The memory 2 used in the device as in the invention is advantageously a RAM volatile memory (Random Access Memory); these memories, in particular, require a very short time, typically a few nanoseconds, to record the temperatures calculated. In this way, the low recording times for the values calculated do not lead to significant delays in the operation of the protection device in the event of a thermal overload condition occurring, thus preventing the successful execution of the calculation from being compromised.

If non-volatile memories were used, the fact that they require considerable save times, typically 5 ms, would make it necessary for the protection device to trip with a delay sufficient to enable the writing of the last temperatures calculated in the memory in a thermal overload condition. Consequently, if the operation of the protection device were due to significant faults, such as a short circuit for example, the time that elapses between the saving of the data in the non-volatile memory and the actual tripping of the protection device could cause significant changes in the actual temperatures of the motor; this could lead to considerable errors of difference between the temperature saved and the actual temperature of the motor before it is switched off, consequently defeating the very purpose of using the memory.

A further disadvantage of non-volatile memories compared to volatile memories resides in the fact that, in addition to requiring an internal power supply circuit that makes them economically disadvantageous in comparison to volatile memories, they offer a limited area for recording data such that it is not possible to record the temperature values calculated continuously. As a result it would be impossible to have a complete image of the motor's temporal dynamic.

When in normal operating conditions, which is to say when the value T_{cu} calculated is below the predetermined threshold, the interfacing means 14 reset the digital timer of the timer unit 3, which starts at each calculating step; the calculation phases are then repeated in the same way as previously described with continuous updating of the temperature values recorded in the memory 2.

Conversely, if the value calculated T_{cu} exceeds a predetermined threshold, the comparator means 13 send a trip signal 15 to a logical opening unit 16. The overload protection device trips sending a corresponding signal 19 that opens a contactor or a switch 17 causing the power supply to the motor 20 to be interrupted. In this phase, the interruption of the main power supply to the motor also causes the protection device 100 that is operationally associated with it to be without power; as a consequence, the timer of the unit 3 can no longer be reset by the interfacing means 14 and measures the time tₛ for which the power of the motor is interrupted.

During this interruption phase, a single power supply unit 4 advantageously supplies the timer unit 3 and the memory 2 with the power required, respectively, to measure the time tₛ and to retain the last temperature values T_{cu} and T_{fe} recorded, according to a constructional solution that is simultaneously simple and effective, as well as compact and cost efficient.

The power supply unit 4 takes the form of an RC electric circuit, for example, in which the capacitor, charged during the motor's normal operating phase, discharges in the power supply interruption phase, supplying the power required to the timer and memory. This capacitor is suitably dimensioned to supply power to operate the timer and keep the temperature values in the memory for sufficient time for the motor to return to acceptable temperatures for a new start that may be considered cold, such as 45 min for example. In this case, the initial temperature values to be inserted in the thermal model are contained in suitable pre-recorded tables belonging to the programmable computing means.

Whenever the motor is switched back on again in less time than that required to consider the motor completely cold, the time measurement tₛ measured by the timer unit and the last values indicating the temperatures T_{cu} and T_{fe} saved in the memory 2 are transferred by the interfacing means 14 to the programmable computing means 10 to calculate the new temperature values identifying the thermal status of the motor. In this way, when the power is switched back on again, one thus obtains precise initial values of the status variables T_{cu} and T_{fe} that reflect the cooling dynamic of the motor between the time it was switched off and subsequently started again that make it possible to prevent inappropriate operation of the protection device.

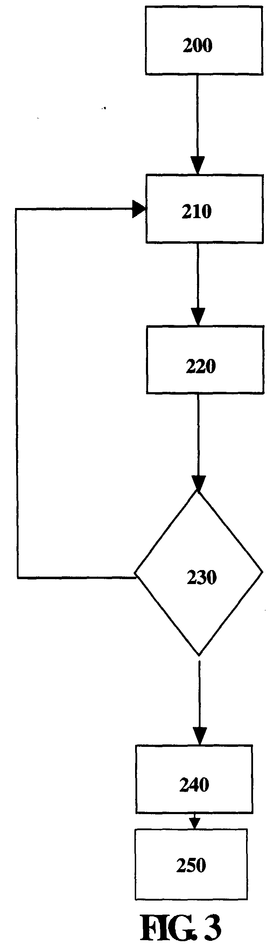

In practice, as shown in diagrammatic form in Figure 3, the protection device is initialised with the starting of the digital timer in the phase 200 when the motor is switched on; this is followed by a phase 210 for acquiring a current signal that, processed as described above, is used in a phase 220 for calculating the status variables of a thermal model, the equations of which simulate, in particular, the running of the temperatures of the copper and iron in the motor. In a phase 230, the temperature value T_{cu} is compared to a predetermined threshold value; if T_{cu} is below said threshold, the previous phases are repeated starting from phase 210 and the timer is reset. When T_{cu} is higher than the predetermined threshold, the last values of T_{cu} and T_{fe} calculated are recorded in the memory in a phase 240 and kept there thanks to the RC power supply circuit; the motor is switched off simultaneously and the interruption time tₛ of the motor is measured using the timer, which is also powered by the same RC circuit.

In the phase 250, when the motor is restarted, the last values of T_{cu} and T_{fe} calculated and of the power supply interruption time tₛ are supplied to the programmable computing means 10 and inserted in the equation of the thermal model for a phase 240 for calculating new temperature values identifying the thermal status of the motor when it is switched back on. Upon the initial starting of the motor, or if the power supply interruption time is sufficient for considering the motor cold, the initial values of the status variables T_{cu} and T_{fe} of the mathematical model are those corresponding to the cold motor conditions located in suitable tables.

The device thus conceived is capable of numerous modifications and variants that are all within the inventive concept; moreover all the details may be substituted by other technically equivalent elements. It is in this way, for example, therefore possible to use known microcontrollers, the structure of which incorporates both the timer and the memory required to record the temperature values calculated.

In practice, the dimensions and materials can be of any kind to suit the requirements and state of technology.

## Claims

1. Device for the thermal overload protection of an electric motor connected to a power supply line characterised by the fact that it comprises:
- a processing and control unit suitable for calculating values indicating the temperatures of the motor, said processing and control unit supplying in output to interruption means a signal for interrupting the power supply to the motor when the temperature values calculated exceed a predetermined threshold;
- a volatile memory for saving the last temperature values calculated by the processing unit before an interruption of the power supply;
- a digital timer unit that measures the duration tₛ of the power supply interruption time, said timer unit and the thermal memory being powered by a single power supply unit during the phase in which the power supply is interrupted;
the value tₛ and said last temperature values being supplied to the processing unit for the calculation of new temperature values identifying the thermal status of the motor at the moment it is switched back on.

2. Device for the thermal overload protection of an electric motor as in claim 1 characterised by the fact that said processing and control unit comprises computing and conversion means that receive in input an analogue signal indicating the power supply current of the motor and supply in output a digital signal indicating the root mean square value of the power supply current of the motor.

3. Device for the thermal overload protection of an electric motor as in claim 2 characterised by the fact that said processing and control unit comprises programmable computing means that receive in input said digital signal indicating the root mean square value of the power supply current of the motor and calculate values indicating the temperatures of the motor.

4. Device for the thermal overload protection of an electric motor as in claim 3 characterised by the fact that the processing and control unit comprises comparator means that receive in input from said programmable computing means a signal corresponding to said values indicating the temperatures of the motor and send a corresponding trip signal to an opening logic when said values indicating the temperatures of the motor exceed a predetermined threshold.

5. Device for the thermal overload protection of an electric motor as in claim 3 characterised by the fact that the processing and control unit comprises interfacing means that receive in input from the programmable computing means signals corresponding to said values indicating the temperatures of the motor and send them to the volatile memory that saves them until the subsequent sending of new signals, said interfacing means also simultaneously resetting the digital timer unit.

6. Device for the thermal overload protection of an electric motor as in claim 5 characterised by the fact that said interfacing means transfer the last values indicating the temperatures motor saved in the volatile memory and the time tₛ measured by the timer unit to the programmable computing means for calculating new temperature values identifying the thermal status of the motor, at the moment when the power supply is switched back on again.

7. Device for the thermal overload protection of an electric motor as in one or more of claims from 3 to 6 characterised by the fact that said programmable computing means comprise a programmable memory selected from the group consisting of EPROM (Erasable Programmable Read-Only-Memory), EEPROM (Electrically Erasable Programmable Read-Only-Memory), flash memory and PROM (Programmable Read-Only-Memory) programmable memories.

8. Device for the thermal overload, protection of an electric motor as in one or more of the previous claims characterised by the fact that said volatile memory is a memory of the RAM (Random Access Memory) type.

9. Device for the thermal overload protection of an electric motor as in one or more of the previous claims characterised by the fact that said interruption means comprise a contactor or a switch.

10. Device for the thermal overload protection of an electric motor as in one or more of the previous claims characterised by the fact that said power supply unit for the volatile memory and the digital timer unit comprises an RC electric circuit.

11. Method for the thermal overload protection of an electric motor connected to a power supply line characterised by the fact that it comprises the following phases:
a) acquiring a signal indicating the power supply current of the motor;
b) calculating, using programmable computing means, values indicating the temperatures of the motor by means of a thermal model of the motor itself, updating said values in a volatile memory;
c) comparing at least one of said values indicating the temperatures of the motor with a predetermined threshold, and in the event of said threshold being exceeded,
d) interrupting the power supply to the motor, saving the last temperature values calculated in said volatile memory;
e) measuring the power supply interruption time tₛ of the motor using a digital timer unit, said timer unit and the volatile memory being powered by a single power supply unit; and, at the moment the motor is switched back on again,
f) supplying to said programmable computing means the value tₛ and the last temperature values saved in the memory to calculate new values identifying the thermal status of the motor.
